# Europäisches Patentamt
# European Patent Office
# Office européen des brevets

(11) Veröffentlichungsnummer : **0 047 889**
**B1**

(12) **EUROPÄISCHE PATENTSCHRIFT**

(45) Veröffentlichungstag der Patentschrift :
**05.06.85**

(21) Anmeldenummer : **81106608.3**

(22) Anmeldetag : **26.08.81**

(51) Int. Cl.⁴ : **C 08 F220/04, C 08 F212/00,
C 09 G 1/16 // (C08F220/04,
212:00),(C08F212/00,
220:04)**

(54) Alkalilösliche Harze auf Basis von Copolymerisaten aus monoolefinisch ungesättigten Carbonsäuren und durch Aromaten substituierten alpha-Olefinen und ihre Verwendung als Harzkomponente in Polymerdispersionen.

(30) Priorität : **11.09.80 DE 3034171**

(43) Veröffentlichungstag der Anmeldung :
**24.03.82 Patentblatt 82/12**

(45) Bekanntmachung des Hinweises auf die Patenterteilung : **05.06.85 Patentblatt 85/23**

(84) Benannte Vertragsstaaten :
**AT BE CH DE FR GB IT LI NL SE**

(56) Entgegenhaltungen :
**DE-A- 2 502 172
FR-A- 2 294 231
GB-A- 1 107 249**

(73) Patentinhaber : **BASF Aktiengesellschaft
Carl-Bosch-Strasse 38
D-6700 Ludwigshafen (DE)**

(72) Erfinder : **Hambrecht, Juergen, Dr.
An der Steige 34
D-6903 Neckargemuend-Dilsberg (DE)**
Erfinder : **Czauderna, Bernhard, Dr.
Kapellenweg 34
D-6945 Hirschberg (DE)**
Erfinder : **Kuehneweg, Otto
Kranichstrasse 8
D-6700 Ludwigshafen (DE)**
Erfinder : **Dietsche, Wolfram, Dr.
Albrecht-Duerer-Ring 34B
D-6710 Frankenthal (DE)**

Jouve, 18, rue St-Denis, 75001 Paris, France

**Beschreibung**

Die Erfindung betrifft neue alkalilösliche Harze für Polymerdispersionen, hergestellt aus Styrol oder Vinyltoluol und monoolefinisch ungesättigten Carbonsäuren durch kontinuierliche Copolymerisation in Abwesenheit von Radikalbildnern und Lösungsmitteln. Sie betrifft weiter die Verwendung dieser Harze als Harzkomponente in Polymerdispersionen für die Herstellung von Selbstglanzemulsionen zur Beschichtung von Fußböden und anderen Oberflächen. Alkalilösliche Harze, die sich als Harzkomponente für Polymerdispersionen dieser Art eignen, und die sich z. B. aus Styrol und (Meth)acrylsäure als Comonomere aufbauen und Molgewichte von 700 bis 5 000 aufweisen, sind aus der DE-AS 15 19 201 und der GB-PS 1 107 249 bekannt. Sie weisen Säurezahlen von 140 bis 300 auf und werden durch Lösungspolymerisation in Gegenwart von radikalbildenden Initiatoren und Reglern in diskontinuierlicher Fahrweise erhalten. Der Nachteil solcher Harze besteht darin, daß sie den Selbstglanzfilmen, die sich aus den Selbstglanzemulsionen bilden, keine zusätzliche Wiederanlösestabilität beim Auftrag des zweiten Films verleihen. Wenn eine Selbstglanzemulsion mangelnde Wiederanlösestabilität hat, wird der erste Film beim Aufbringen der zweiten Filmschicht durch die Selbstglanzemulsion selber angelöst und es entstehen unschöne Flecken, die eine Entfernung und Neuauftrag der Selbstglanzemulsion erforderlich machen. Ökonomische Gründe sind es vor allem, die einer zu häufigen Erneuerung der Filme entgegenstehen, und so bestand das Ziel der Erfindung darin, eine alkalilösliche Harzkomponente zu entwickeln, welche die sich aus den Selbstglanzemulsionen bildenden Filme wiederanlösestabil macht. Die hier gemeinten Selbstglanzemulsionen für Fußböden bestehen im wesentlichen aus einer oder mehreren Polymerdispersionen und meistens einer Wachsemulsion.

Dieses Ziel wurde überraschenderweise mit alkalilöslichen Polymerisat-Harzen erreicht, wie sie gemäß den Patentansprüchen 1 bis 3 definiert sind.

Wesentlich für die erfindungsgemäßen Eigenschaften sind bei diesen Harzen die zahlenmäßigen Verhältnisse der Comonomereinheiten, die Säurezahl, das Molgewicht und das Polymerisationsverfahren.

Aus der DE-OS 25 02 172 sind Harze bekannt, die u. a. durch thermische Copolymerisation — also ebenfalls ohne radikalbidende Initiatoren — von 2 bis 35 Gew.% Acrylsäure, Styrol und Maleinsäureanhydrid bei ca. 150 bis 300 °C erhalten werden. Diese Harze enthalten also wesentlich weniger Acrylsäure einpolymerisiert, sind schwerer oder überhaupt nicht alkalilöslich und werden gemäß der genannten Publikation als Papierleimungsmittel empfohlen. Sie eignen sich nicht als Harzkomponente in Polymerdispersionen und werden auch an keiner Stelle der genannten Offenlegungsschrift für diesen Zweck empfohlen.

Im Hinblick auf die vorgenannte DE-AS 15 19 201 ist es erstaunlich, daß die höhere Säurezahl und das thermische Polymerisationsverfahren bei Temperaturen von 200 bis 400 °C zu Produkten an sich ähnlichen Aufbaus führt, welche aber den Selbstglanzfilmen die wesentlich verbesserte Eigenschaft der Wiederanlösestabilität verleihen im Vergleich zu den Filmen aus Selbstglanzemulsionen gemäß dem Stand der Technik.

Darüberhinaus wurde überraschenderweise gefunden, daß diese neuen Harze den Selbstglanzfilmen zusätzlich höheren Glanz, höhere Härte, verbesserte Trittfestigkeit, verbesserte Resistenz gegen Radierer, schwarze Gummistriche und Schmutz verleihen. Außerdem verbessern sie die Benetzungswirkung der Selbstglanzemulsionen.

Als Polymerisationsapparatur kann z. B. ein Druckkessel, eine Druckkesselkaskade, ein Druckrohr oder auch ein Druckkessel mit einem nachgeschalteten Reaktionsrohr, das mit einem statischen Mischer versehen ist, verwendet werden. Vorzugsweise polymerisiert man die Monomeren a), b) und gegebenenfalls c) in mindestens zwei hintereinander geschalteten Polymerisationszonen. Dabei kann die eine Reaktionszone aus einem druckdichten Kessel, die andere aus einem druckdichten Reaktionsrohr, vorzugsweise einem beheizbaren statischen Mischer bestehen. Wenn man die Polymerisation in zwei hintereinandergeschalteten Zonen durchführt, erhält man Umsätze, die oberhalb 99 % liegen. Während der Polymerisation muß für eine gute Durchmischung der Komponenten gesorgt werden, beispielsweise verwendet man druckdichte Kessel, die mit einem Rührer ausgestattet sind, oder Polymerisationsrohre mit statischen Mischern.

Die Copolymerisation wird kontinuierlich und in Abwesenheit von radikalbildenden Initiatoren durchgeführt. Ein Copolymerisat aus Styrol, Acrylsäure und Maleinsäureanhydrid kann beispielsweise dadurch hergestellt werden, daß man die Monomeren einem Reaktor oder zwei hintereinandergeschalteten Polymerisationszonen, beispielsweise einer Druckkesselkaskade, kontinuierlich zuführt und nach einer Verweilzeit von 3 bis 60, vorzugsweise 5 bis 30 Min. bei Temperaturen zwischen 200 und 400 °C kontinuierlich aus der Reaktionszone ausschleußt. Die Einhaltung dieser Temperaturgrenzen ist wichtig, da bei Unterschreiten die Verweilzeiten zu lang und die Molgewichte zu hoch werden, und bei Überschreitung thermische Zersetzungsprozesse eintreten können.

Die Polymerisation wird bei Drücken von > 1 bar, vorzugsweise zwischen 1 und 200 bar durchgeführt. Besonders gute Ergebnisse erhält man, wenn man die Polymerisationsreaktion bei periodischen Druckschwankungen mit Druckdifferenzen zwischen 5 und 120 bar durchführt und anschließend ebenfalls bei periodischen Druckschwankungen mit denselben Druckdifferenzen entspannt. Diese

2

**0 047 889**

Maßnahme, die eine pulsierende Strömung des Reaktionsgutes zur folge hat, bewirkt eine Selbstreinigung des Reaktors und verhindert produktschädigende Wandbeläge und Anbackungen im Reaktor. Der Produktaustrag ist homogen und enthält keine Stippen oder vercracktes Material.

Unter kontinuierlicher Polymerisation im Sinne der vorliegenden Erfindung soll auch eine Arbeitsweise verstanden werden, bei der in einer Polymerisationszone, z. B. in einem Kessel, zunächst etwa 10 % der Monomeren-Mischung vorgelegt wird und bei der man dann anschließend den Rest der Monomeren-Mischung kontinuierlich im Verlauf von 30 bis 300 Min. zulaufen läßt. Bei dieser Verfahrensvariante liegen jedoch die Raumzeitausbeuten nicht so hoch wie bei dem kontinuierlichen Polymerisieren in zwei hintereinandergeschalteten Reaktionszonen.

Im Gegensatz zu den bekannten Verfahren wird in Abwesenheit eines Lösungsmittels polymerisiert.

Die so erhaltenen Copolymerisate sind in Polymerdispersionen zur Herstellung von Selbstglanzemulsionen für die Beschichtung von Fußböden oder anderen Oberflächen einsetzbar. Solche Polymerdispersionen beruhen auf Additionspolymerisaten, wie sie beispielsweise aus der DE-AS 15 19 316 oder der eingangs genannten DE-AS 15 19 201 bekannt sind. Sie bestehen beispielsweise aus Methyl(meth)acrylat, Butylacrylat und bis zu 20 Gew.% Acrylsäure oder Methacrylsäure. Zur Herstellung von Selbstglanzemulsionen werden sie häufig mit einem Wachs natürlichen oder künstlichen Ursprungs kombiniert, z. B. in Form von Polyethylenwachs-Emulsionen, bei denen das Polyethylenwachs Molgewichte zwischen 1 500 und 30 000 aufweist.

Die erfindungsgemäßen alkalilöslischen Harze werden den Polymerdispersionen zu etwa 0,2 bis 10 Gew.%, — bezogen auf Feststoffgehalt — vorzugsweise 0,5 bis 2 Gew.%, zugesetzt.

Die übrigen Komponenten und ihre zahlenmäßigen Mengenverhältnisse gehören zum Wissen des Fachmanns. Es sei ausdrücklich auf die DE-AS 15 19 316 und 15 19 201 hingewiesen.

Die nun folgenden Beispiele erläutern die Erfindung. Angegebene Teile sind Gewichtsteile.

## Beispiel 1

47 Teile Styrol, 50 Teile Acrylsäure und 3 Teile Maleinsäureanhydrid wurden in einen 1-l-Druckkessel mit nachgeschaltetem Druckrohr doppelten Rauminhalts mit Druckregler kontinuierlich zudosiert. Das System wurde auf 310 °C erhitzt. Der Druck wurde im Bereich zwischen 5 und 50 bar gehalten und einmal innerhalb einer Minute durch eine periodische Druckregelung in diesem Bereich variiert. Die Verweilzeit betrug 11 Min. ; die Copolymerschmelze wurde mengenmäßig in dem Maße ausgefahren, wie frische Monomerenmischung zugefahren wurde. Das Copolymerisat wies eine Säurezahl von 356 und ein mittleres Molgewicht von 650 auf.

## Beispiel 2

50 Teile Styrol und 50 Teile Acrylsäure wurden gemäß Beispiel 1 copolymerisiert. Die Temperatur betrug 290 °C, die Verweilzeit 15 Minuten und der Druck zwischen 5 und 60 bar.

Das erhaltene Copolymerisat wies ein mittleres Molgewicht von 670 und eine Säurezahl von 380 auf.

## Beispiel 3

40 Teile Styrol, 54 Teile Acrylsäure und 6 Teile Maleinsäureanhydrid wurden gemäß Beispiel 1 copolymerisiert. Die Temperatur betrug 300 °C, der Druck 10 bis 80 bar und die Verweilzeit 9 Minuten.

Das erhaltene Copolymerisat wies ein mittleres Molgewicht von 720 und eine Säurezahl von 420 auf.

## Anwendungstechnische Beispiele

Es wurden zwei Selbstglanzemulsionen getestet, die folgende Zusammensetzungen aufweisen.

Selbstglanzemulsion A (erfindungsgemäß)

40 Gew.-Tl. einer 40 gew.-%igen wäßrigen Dispersion eines Copolymerisats aus

    38 Gew.-Tl. Styrol
     8 Gew.-Tl. Methacrylsäure
    24 Gew.-Tl. Methacrylsäuremethylester
    24 Gew.-Tl. Acrylsäurebutylester
     1 Gew.-Tl. Zink in Form eines Aminkomplexes (Tetraminacetat)
     1 Gew.-Tl. eines Harzes gemäß Beispiel 1

47 Gew.-Tl. Wasser
 4 Gew.-Tl. ca. 34 %ige Emulsion eines oxidierten Polyethylens
5,5 Gew.-Tl. Ethyldiglykol (temporäres Weichmachungsmittel)
2,5 Gew.-Tl. Tributoxyethylphosphat (permanentes Weichmachungsmittel)

3

1 Gew.-Tl. eines fluorierten Tensids (Verlaufmittel)

ergibt 100,0 Teile Selbstglanzemulsion

Selbstglanzemulsion B (Vergleich)

Wie A, jedoch als Harz ein Polymerisat, das die gleiche Zusammensetzung wie das gemäß Beispiel 1 erhaltene aufweist, jedoch durch Lösungspolymerisation erhalten wurde.

Die Selbstglanzemulsionen wurden auf Linoleum und PVC-Fußbodenbeläge aufgetragen.

Die entstandenen Filme wurden verschiedenen auf diesem Anwendungsgebiet gebräuchlichen Labortests und einem dreiwöchigen Begehtest unterworfen.

Die Ergebnisse der erfolgten visuellen Beurteilung der labormäßigen Prüfungen und des praktischen Begehtests sind in der folgenden Tabelle durch Wertzahlen ausgedrückt. Es bedeuten hierbei: 1 = ungenügend bis 5 = sehr gut.

Tabelle

|  | Selbstglanzemulsion | |
|---|---|---|
|  | A | B |
| Wiederanlösestabilität (keine Flecken nach dem zweitem Filmauftrag) | 5 | 3 |
| Wasserfestigkeit (Gardner-Abrasiontester) | 5 | 3 |
| Glanz (Reflexionsglanzmeßgerät nach Dr. Lange) | 5 | 4 |
| Begehtest | 5 · | 2,5 |
| Resistenz gegen Absatzradierer (Strichtest mit Gummiabsatz) | 4,5 | 2,5 |
| Netzfähigkeit der Emulsion | 5 | 3 |
| Tensidresistenz | 5 | 3,5 |
| Entfernbarkeit (Gardner-Test mit Grundreiniger) | 5 | 5 |

## Patentansprüche

1. Alkalilösliche Harze für Polymerdispersionen auf Basis statistisch aufgebauter Copolymerisate aus

    a) 55 bis 45 Gew.-% Styrol oder Vinyltoluol,
    b) 45 bis 55 Gew.-% Acrylsäure oder Methacrylsäure und
    c) 0 bis 10 Gew.-%, bezogen auf a) + b), Maleinsäure oder Maleinsäureanhydrid

mit Säurezahlen von 300 bis 500 und mittleren Molekulargewichten von 500 bis 5 000, hergestellt durch kontinuierliche Copolymerisation bei Temperaturen von 200 bis 400 °C, Drucken von > 1 bar, einer Verweilzeit von 3 bis 60 Minuten und in Abwesenheit von radikalbildenden Initiatoren und in Abwesenheit von Lösungsmitteln.

2. Alkalilösliche Harze nach Anspruch 1, bei denen die kontinuierliche Copolymerisation bei Drucken zwischen 1 und 200 bar durchgeführt wird.

3. Alkalilösliche Harze nach Ansprüchen 1 oder 2, die zusätzlich 2 bis 10 Gew.-% an Maleinsäureeinheiten einpolymerisiert enthalten.

4. Verwendung der Harze nach Ansprüchen 1 bis 3 als Harzkomponenten in Polymerdispersionen für Selbstglanzemulsionen zur Beschichtung von Fußböden in einer Menge von 0,2 bis 10 Gew.-%, bezogen auf den Feststoffgehalt der Polymerdispersionen.

## Claims

1. An alkali-soluble resin for polymer dispersions, which resin is based on a random copolymer consisting of

    a) 55 to 45 % by weight of styrene or vinyltoluene,
    b) 45 to 55 % by weight of acrylic acid or methacrylic acid, and
    c) 0 to 10 % by weight, based on the sum of (a) and (b), of maleic acid or maleic anhydride,

has an acid number of from 300 to 500 and a mean molecular weight of from 500 to 5,000, and is prepared by continuous copolymerization at from 200 to 400 °C under a pressure of > 1 bar and in the absence of free radical initiators and of solvents, the residence time being from 3 to 60 minutes.

2. An alkali-soluble resin as claimed in claim 1, in the preparation of which the continuous copolymerization is carried out under a pressure of from 1 to 200 bar.

3. An alkali-soluble resin as claimed in claim 1 or 2, which additionally contains from 2 to 10 % by weight of maleic acid as copolymerized units.

4. The use of a resin as claimed in claims 1 to 3, as resin component in polymer dispersions for self-shine emulsions for coating floors, in an amount of from 0.2 to 10 % by weight, based on the solids content of the polymer dispersion.

**Revendications**

1. Résines solubles dans les alcalis pour dispersions de polymères à base de copolymérisats de structure stochastique, formés de

a) 55 à 45 % en poids de styrène ou de vinyl-toluène,
b) 45 à 55 % en poids d'acide acrylique ou d'acide méthacrylique et
c) 0 à 10 % du poids de a) + b) d'acide maléique ou d'anhydride maléique,

possédant des poids moléculaires de 500 à 5 000 et des indices d'acide de 300 à 500, préparées par une copolymérisation en continu à des températures de 200 à 400 °C et une pression supérieure à 1 bar et avec des durées de séjour de 3 à 60 minutes, en l'absence de solvants et d'amorceurs formant des radicaux libres.

2. Résines solubles dans les alcalis suivant la revendication 1, préparées par une copolymérisation continue sous des pressions de 1 à 200 bars.

3. Résines solubles dans les alcalis suivant les revendications 1 et 2, contenant en outre entre 2 et 10 % en poids d'unités acide maléique copolymérisées.

4. Utilisation de résines suivant les revendications 1 à 3 comme composantes résineuses pour des émulsions auto-brillantes pour l'enduction de planchers en des proportions de 0,2 à 10 % en poids par rapport à la teneur en matières solides des dispersions de polymères.